**Europäisches Patentamt**

**European Patent Office**

**Office européen des brevets**

(19)

(11) Veröffentlichungsnummer: **0 186 000**
**B1**

(12) # EUROPÄISCHE PATENTSCHRIFT

(45) Veröffentlichungstag der Patentschrift:
23.09.87

(51) Int. Cl.⁴: **A 47 J 45/06**

(21) Anmeldenummer: **85115474.0**

(22) Anmeldetag: **05.12.85**

(54) **Hohlgriff aus Metall.**

(30) Priorität: **13.12.84 DE 8436478 U**

(43) Veröffentlichungstag der Anmeldung:
**02.07.86 Patentblatt 86/27**

(45) Bekanntmachung des Hinweises auf die Patenterteilung:
**23.09.87 Patentblatt 87/39**

(84) Benannte Vertragsstaaten:
**DE FR GB IT**

(56) Entgegenhaltungen:
**DE-A-2 831 194**
**FR-A-980 272**
**GB-A-178 028**
**US-A-4 032 032**

(73) Patentinhaber: **Heinrich Baumgarten KG**
**Spezialfabrik für Beschlagteile, Postfach 1620,**
**D-5908 Neunkirchen (DE)**

(72) Erfinder: **Baumgarten, Rolf, Mischenbachstrasse**
**29, D-5908 Neunkirchen- Wiederstein (DE)**

(74) Vertreter: **Missling, Arne, Dipl.- Ing.,**
**Patentanwälte Dipl.- Ing. R. Schlee Dipl.- Ing. A.**
**Missling Bismarckstrasse 43, D-6300 Giessen (DE)**

EP 0 186 000 B1

## Beschreibung

Die Erfindung betrifft einen Hohlgriff aus Blech für die Befestigung an an Töpfen anschweißaren Schweißbolzen mit drei- oder mehreckigem Querschnitt und mit einer mit Gewinde versehenen Bohrung.

Töpfe, wie z. B. Aluminiumtöpfe oder Töpfe aus rostfreiem Stahl, werden u.a. mit hohlen Griffen aus Blechen bestückt, die über Nieten am Topfrand befestigt sind. Diese Nieten zeigen jedoch den Nachteil, daß sie zum einen störend auf der Innenseite des Topfes sich bemerkbar machen und auch zum anderen keine dauerhaft feste Verbindung zwischen Topf und Griff gewährleisten. Das unmittelbare Anschweißen der aus Blech geformten Griffe am Aluminiumtopf ist nicht möglich, da hier eine Schweißverbindung nicht erstellbar ist. Bekannt ist es ferner, am Aluminiumtopf Kunststoffgriffe zu befestigen, die auf einem am Aluminiumtopf angeschweißten Schweißbolzen aus Aluminium befestigt sind, der im Querschnitt eine mehreckige Form hat, so daß hier eine Verdrehsicherung zwischen Topf und Griff dadurch hergestellt werden kann, daß der Hohlraum des Kunststoffgriffes entsprechend den Abmessungen des Schweißbolzens aussgebildet ist. Die Befestigung des Kunststoffgriffes mit dem Aluminiumtopf erfolgt über eine Schraube, die einerseits in den Schweißbolzen eingreift und andererseits am Kunststoffgriff anliegt und diesen gegen die Geschirrwandung preßt. Der Nachteil eines Kunststoffgriffes besteht darin, daß dieser nicht wärmebeständig und auch auf die Dauer nicht spülmaschinenbeständig ist. Darüberhinaus zeigt diese Befestigungsart mittels Schweißbolzen und Schraube bei Aluminiumtöpfen den Nachteil, daß bei einem hohen Anzugsmoment der Schraube, welches für eine sichere und spielfreie Befestigung des Griffes am Geschirr notwendig ist, leicht eine Deformation der in der Regel relativ dünnen und weichen Geschirrwandung eintritt. Die gleichen Fertigungsschwierigkeiten treten bei der Befestigung von Kunststoffgriffen an rostfreien Geschsirren auf.

Der Erfindung liegt die Aufgabe zugrunde, einen Hohlgriff aus hitzebeständigem Blech vorzuschlagen, der über einen am Geschirr befestigbaren Schweißbolzen mit dem Geschirr verbindbar ist, ohne daß eine Verformung der Geschirrwandung eintritt, wobei der Griff gleichermaßen ein Stiel oder ein Seitengriff sein kann.

Diese Aufgabe wird mit den Merkmalen des kennzeichnenden Teils des Anspruches 1 gelöst.

Bei einem erfindungsgemäß ausgebildeten Griff ist somit im Anschlußteil des Hohlgriffes am Topf ein Formteil aus einem Blech eingeschweißt. Dieses Formteil bildet eine Anlagefläche für den Schweißbolzen. Dies hat den Vorteil, daß beim Anziehen der Schraube eine Verspannung zwischen dem Griff und dem Schweißbolzen aus Aluminium stattfindet, wobei der Griff mit seinem vorderen Ende an der Seitenwandung des Aluminiumtopfes nicht zur Anlage zu kommen braucht. Hierdurch ist gewährleistet, daß von dem Griff auf die Wandung des Topfes keine Kraft ausgeübt wird, was zu einer Deformation derselben führen kann.

Am vorderen Teil des Formteiles sind des weiteren zwei Laschen ausgestellt, die den Schweißbolzen seitlich umgreifen und so eine Verdrehsicherung zwischen Griff und Schweißbolzen und damit dem Topf bilden. In der Anlagefläche des Formteiles am Bolzen ist des weiteren eine Bohrung ausgebildet, durch die die Befestigungsschraube greift, deren Kopf oder deren spezielle Anlagefläche auf der dem Bolzen abgewandten Seite des Formteiles anliegt. Vorteilhaft ist die Schraube mit einem verlängerten Stiel ausgebildet, wodurch eine einfachere Befestigung des Griffes am Geschirr möglich ist, da die Schraube durch das hinten offene Ende des Griffes betätigt werden muß.

Vorteilhaft ist das Formteil mit einer napfförmigen Ausbildung versehen, in die der Schweißbolzen eingreift, so daß dieser allseitig geführt ist, wobei gleichzeitig auch Haltekräfte über die Seitenflächen des Bolzens auf den Griff übertragen werden können.

Da zum einen relativ große Toleranzen bei der Befestigung des Griffes ausgeglichen werden müssen und zum anderen eine Sicherung gegen ein unbeabsichtigtes Lockern der Schraube erhalten wird, sind gemäß einem weiteren Vorschlag der Erfindung in der Anlagefläche des Bolzens am Formteil Laschen ausgestellt, die zur Anlage am Bolzen kommen. Beim Anziehen der Schraube wird diese so weit verdreht, bis die erforderliche Anpreßkraft und der gewünschte Abstand der Vorderkante des Griffes zur Seitenwand des Geschirrs erreicht ist.

Mehrere Ausführungsbeispiele der Erfindung sind im folgenden anhand der Zeichnung näher beschrieben, in dieser zeigen:

Fig. 1 eine Seitenansicht eines erfindungsgemäß ausgebildeten Holgriffes im Schnitt,

Fig. 2 eine Draufsicht auf das in Fig. 1 gezeigte Ausführungsbeispiel, teilweise im Schnitt,

Fig. 3 eine Seitenansicht analog Fig. 1, jedoch mit einer anders gestalteten Befestigungsschraube,

Fig. 4 eine Seitenansicht des im Griff eingesetzten Formteils, teilweise im Schnitt,

Fig. 5 eine Vorderansicht des Formteiles nach Fig. 4,

Fig. 6 eine Draufsicht auf das in Fig. 5 gezeigte Formteil,

Fig. 7 eine Draufsicht auf einen erfindungsgemäß ausgebildeten Hohlgriff im Schnitt, mit eingeschweißtem Formteil und

Fig. 8 eine Draufsicht auf einen erfindungsgemäß ausgebildeten Seitengriff, teilweise im Schnitt.

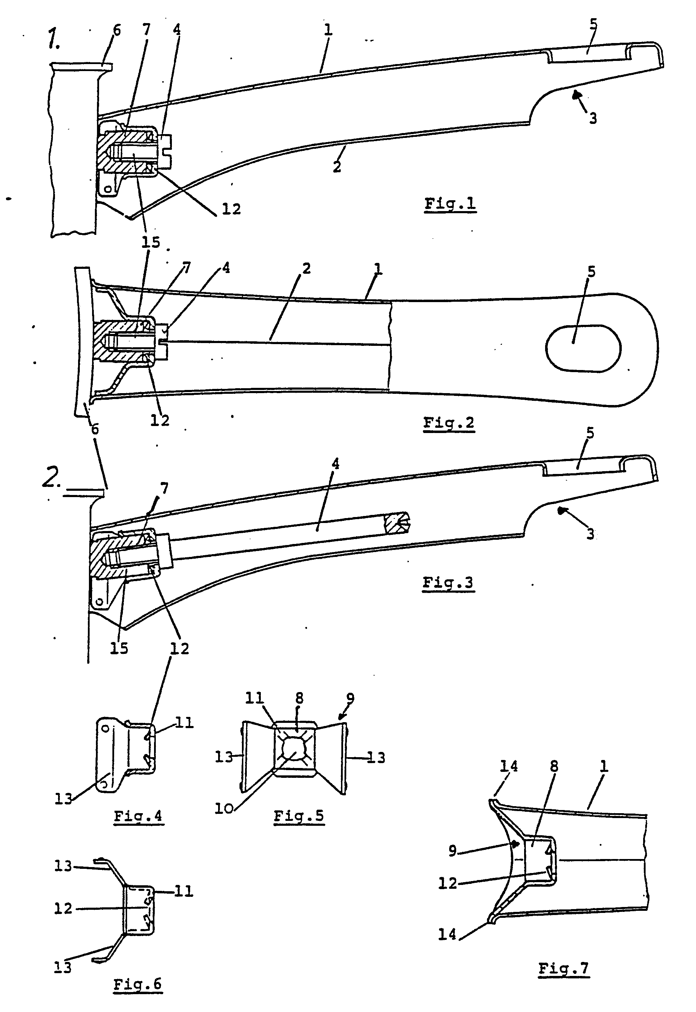

In den Figuren bezeichnet 1 einen erfindungsgemäß ausgebildeten Hohlgriff, der in den Fig. 1 bis 3 und 7 in Form eines Stielgriffes dargestellt ist. Der Griff 1 ist aus einem einstückigen Blech geformt und an seiner Stoßstelle 2 zusammengeschweißt. Das hintere Ende 3 des Griffes ist offen ausgebildet, so daß durch dieses Ende ein Schraubenzieher bis zu der Befestigungsschraube 4 eingeführt werden kann. Im hinteren Ende ist des weiteren eine Öffnung 5 im Griff 1 ausgebildet.

Der Hohlgriff 1 ist an einem Geschirr 6 befestigt, und zwar über einen Schweißbolzen 7, der aus Aluminium besteht und an dem gleichfalls aus Aluminium bestehenden Geschirr 6 angeschweißt ist. Der Querschnitt des Schweißbolzens ist quadratisch ausgebildet und hat nur geringfügig kleinere Außenabmessungen als die Innenabmessungen des napfförmigen Teiles 8 eines Formteiles 9, das im Innern des Hohlgriffes 1 eingeschweißt ist.

Das Formteil ist in den Fig. 4 bis 6 dargestellt. Das Formteil 9 besteht aus einem napfförmigen Teil 8 mit einer Bohrung 10 für den Durchtritt der Befestigunsschraube 4. Des weiteren sind in der Anlagefläche 11 des napfförmigen Teiles 8 Laschen 12 ausgestellt, gegen die der Schweißbolzen 7 zur Anlage kommt.

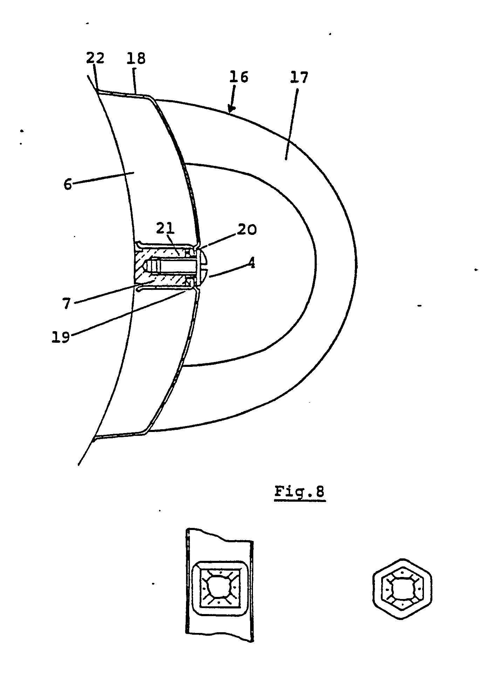

Seitlich am napfförmigen Teil 8 sind zwei weitere Laschen 13 angeformt, die an der Seitenwandung des Hohlgriffes 1 oder aber, wie dies in Fig. 7 dargestellt ist, an der Stirnseite 14 des Griffes 1 angeschweißt sind.

Für die Montage des Griffes 1 wird dieser über den bereits am Geschirr 6 angeschweißten Schweißbolzen 7 geschoben und anschließend die Befestigungsschraube 4 durch die Bohrung 10 in die im Schweißbolzen 7 ausgebildete Gewindebohrung 15 eingeschraubt. Die vorstehenden Laschen 12 dienen einerseits als Toleranzausgleichselemente und andererseits als Verdrehsicherung für die Befestigungsschraube 4. Die Schraube 4 wird so weit angedreht, bis die Stirnseiten 14 des Griffes 1 den Topfrand berühren. Die Anlagekräfte zwischen dem Griff 1 und dem Schweißbolzen werden von den Laschen 12 des Formteiles 9 aufgenommen, so daß der Griff praktisch drucklos ander Geschirrwandung des Geschirres 6 anliegen kann. Durch die Federwirkung der Laschen 12 ist des weiteren gewährleistet, daß die Schraube 4 sich nicht unbeabsichtigt lockern kann. Aus diesem Grunde ist das gesamte Formteil 9 vorteilhaft aus einem federharten Material hergestellt.

In Fig. 3 ist eine Befestigungsschraube 4 dargestellt, die sich von der des Ausführungsbeispiels nach Fig. 1 und 2 dadurch unterscheidet, daß das Ende des Schraubenkopfes verlängert ist, so daß dieses einfacher vom hinteren Ende 3 des Griffes 1 aus erfaßt werden kann.

Durch die napfförmige Ausbildung des Formteiles 9 wird erreicht, daß der Schweißbolzen 7 auch seitlich umgriffen wird. Dies hat nicht nur den Vorteil einer verbesserten Verdrehsicherung, sondern darüberhinaus auch den Vorteil, daß Tragekräfte auch über die Seitenwandung des Schweißbolzens auf den Hohlgriff 1 übertragen werden können.

Bei dem in Fig. 8 dargestellten Hohlgriff handelt es sich um einen Seitengriff 16, der gleichfalls mittels eines Schweißbolzens 7 und einer Befestigungsschraube 4 an einem Aluminiumgeschirr 6 befestigt ist.

Das hintere Ende 17 des Seitengriffes 16 ist in konventioneller Art aus einem Blech geformt und mit einem hutförmigen Teil 18 verbunden, das im Bereich des Schweißbolzens 7 mit einem napfförmigen Teil 19 versehen ist, das entsprechend dem napfförmigen Teil 8 nach den Ausführungsbeispielen 1 bis 7 ausgebildet ist. In der Anlagefläche 20 des napfförmigen Teiles 19 sind gleichfalls Laschen 21 ausgestellt, die zur Anlage am Schweißbolzen 7 kommen. Die Tiefe des napfförmigen Teiles 19 ist der Höhe des Schweißbolzens angepaßt, so daß bei angezogener Schraube die Enden des napfförmigen Teils vor der Wandung des Geschirrs 6 enden. Des weiteren sind auch die Enden 22 des hutförmigen Teils 18 so angepaßt, daß diese bei angezogener Befestigungsschraube 4 nur mit einem geringen Druck an der Geschirrwandung 6 anliegen.

**Patentansprüche**

1. Hohlgriff aus Blech für die Befestigung an an Töpfen anschweißbaren Schweißbolzen (7) mit drei- oder mehreckigem Querschnitt und mit einer mit Gewinde versehenen Bohrung, dadurch gekennzeichnet, daß im Anschlußteil des Hohlgriffes (1, 16) am Geschirr (6) ein Formteil (9) aus Blech angeschweißt ist, das eine stirnseitige Anlagefläche (11) für den Schweißbolzen (7) bildet, daß am Formteil (9) zumindest zwei Laschen (13) ausgestellt sind, die den Aluminiumbolzen seitlich führen, und daß in der Anlagefläche des Formteiles eine Bohrung (10) für die Aufnahme einer Befestigungsschraube (4) angeordnet ist.

2. Hohlgriff nach Anspruch 1, dadurch gekennzeichnet, daß im Formteil (9) ein napfförmiges Teil (8) für die Führung des Schweißbolzens ausgebildet ist, das diesen allseitig eng umschließt.

3. Hohlgriff nach Anspruch 1 oder 2, dadurch gekennzeichnet, daß die am Formteil angeformten Laschen (13) gleichzeitig zur Befestigung des Formteils (9) im Hohlgriff (1, 16) dienen.

4. Hohlgriff nach Anspruch 3, dadurch gekennzeichnet, daß die Laschen (13) auf der Stirnseite (14) des Hohlgriffes (1) angeschweißt sind.

5. Hohlgriff nach einem der Ansprüche 1 bis 4, dadurch gekennzeichnet, daß im Formteil (9) im Bereich der Anlagefläche (11) des Schweißbolzens eine oder mehrere Laschen (12) ausgestellt sind, die zum Schweißbolzen hin gerichtet sind.

6.Hohlgriff nach einem der Ansprüche 1 bis 5, dadurch gekennzeichnet, daß das Formteil (9) aus einem federharten Material besteht.

7. Hohlgriff nach einem der Ansprüche 1 bis 6, dadurch gekennzeichnet, daß das Ende der Befestigungsschraube verlängert ist.

8. Hohlgriff nach einem der Ansprüche 1 bis 7, dadurch gekennzeichnet, daß für einen Aluminiumtopf ein Schweißbolzen aus Aluminium und für einen Topf aus rostfreiem Stahl ein Schweißbolzen aus rostfreiem Stahl verwendet wird.

9. Hohlgriff nach einem der Ansprüche 1 bis 8, dadurch gekennzeichnet, daß der Schweißbolzen in Form eines Schweißsteges ausgebildet ist.

10. Hohlgriff nach einem der Ansprüche 1 bis 9, dadurch gekennzeichnet, daß für Emaillegeschirre Schweißbolzen oder -Stege aus emaillierfähigem Eisen bestehen.

11. Hohlgriff nach einem der Ansprüche 1 bis 10, dadurch gekennzeichnet, daß eine Schraube im Formteil (9) unverlierbar zum Zwecke der leichteren Montage vormontiert ist.

## Claims

1. A hollow handle of sheet metal for securing to welding studs (7) which can be welded to pots and which have a triangular or polygonal cross-section and a bore provided with a thread, characterised in that a moulded member (9) of sheet metal, which forms a bearing surface (11) on its end face for a said welding stud (7), is welded in a part of the hollow handle (1, 16) to be attached to the utensil, at least two brackets (13) for lateral guidance of a said aluminium stud, are formed on the moulded member (9), and a bore (10) for receiving a fastening screw (4) is provided in the bearing surface of the moulded member.

2. A hollow handle according to Claim 1, characterised in that a cup-shaped part (8) for guiding the welding stud and closely surrounding the latter on all sides is provided in the moulded member (9).

3. A hollow handle according to Claim 1 or 2, characterised in that the brackets (13) integrally moulded on the moulded member are used at the same time for securing the moulded member (9) in the hollow handle (1, 16).

4. A hollow handle according to Claim 3, characterised in that the brackets (13) are welded onto the end face (14) of the hollow handle (1).

5. A hollow handle according to any one of Claims 1 to 4, characterised in that one or more brackets (12), which are orientated towards the welding stud, are formed in the moulded member (9) in the region of the bearing surface (11) of the welding stud.

6. A hollow handle according to any one of Claims 1 to 5, characterised in that the moulded member (9) consists of a springy material.

7. A hollow handle according to any one of Claims 1 to 6, characterised in that an end of a fastening screw is extended.

8. A hollow handle according to any one of Claims 1 to 7, characterised in that a welding stud of aluminium is used for an aluminium pot and a welding stud of stainless steel is used for a pot of stainless steel.

9. A hollow handle according to any one of Claims 1 to 8, characterised in that the welding stud is constructed in the form of a welding flange.

10. A hollow handle according to any one of Claims 1 to 9, characterised in that for enamelled utensils the welding studs or flanges consist of iron capable of being enamelled.

11. A hollow handle according to any one of Claims 1 to 10, characterised in that for the sake of easier assembly a screw is mounted in the moulded member (9) in a captive manner beforehand.

## Revendications

1. Poignée creuse en tôle pour fixation sur des chevilles de soudage (7) susceptibles d'être soudées sur des récipients, ayant une section transversale triangulaire ou polygonale, et présentant un perçage fileté caractérisée en ce qu'une pièce profilée (9) en tôle est soudée a la partie de raccordement de la poignée creuse à l'ustensile (6), cette pièce présentant du côté frontal une surface d'application (11) pour la cheville de soudage (7), en ce que deux pattes (13) au moins sont formées sur la pièce profilée (9), ces pattes guidant latéralemet la cheville en aluminium, et en ce qu'un perçage (10) pour recevoir une vis de fixation (4) est pratiqué dans la surface d'application de la pièce profilée.

2. Poignée creuse selon la revendication 1, caractérisée en ce qu'une partie (8) en forme de cuvette est aménagée dans la pièce profilée (9) pour guider la cheville de soudage, enserrant étroitement celle-ci de tous côtés.

3. Poignée creuse selon la revendication 1 ou 2 caractérisée en ce que les pattes (13) formées solidairement sur la pièce profilée servant en même temps a fixer la pièce profilée (9) dans la poignée creuse (1, 16).

4. Poignée creuse selon la revendication 3, caractérisée en ce que les pattes (13) sont soudées sur le côté frontal (14) de la poignée creuse (1).

5. Poignée creuse selon l'une des revendications 1 à 4, caractérisée en ce qu'une ou plusieurs pattes (12), dirigées vers la cheville de soudage, sont formées dans la pièce profilée (9), dans la région de la surface d'application (11) de la cheville de soudage.

6. Piognée creuse selon l'une des revendications 1 à 5, caractérisée en ce que la pièce profilée (9) est constituée en matériau écroui.

7. Poignée creuse selon l'une des revendications 1 à 6, caractérisée en ce que l'extrémité de la vis de fixation est prolognée.

8. Poignée creuse selon l'une des revendications 1 à 7, caractérisée en ce qu'on utilise, pour un récipient en aluminium, une cheville de soudage en aluminium, et pour en récipient en acier inoxydable, une cheville de soudage en acier inoxydabel.

9. Poignée creuse selon l'une des revendications 1 à 8, caractéritsée en ce que la cheville de soudage est constituée sous forme d'une nervure de soudage.

10. Poignée creuse selon l'une des revendications 1 à 9, caractérisée en ce que pour les ustensiles émaillés les chevilles ou nervures de soudage sont en fer pouvant être émaillé.

11. Poignée creuse selon l'une des revendications 1 à 10, caractérisée en ce qu'une vis est montée imperdable et assemblée avec la pièce profilée (9) pour faciliter le montage.

0 186 000

Fig.1

Fig.2

Fig.3

Fig.4

Fig.5

Fig.6

Fig.7

1

22  18        16    17

6

21        20

7                4

19

Fig.8